# EUROPEAN PATENT SPECIFICATION

(11) **EP 0 763 169 B1**
(45) Date of publication and mention of the grant of the patent: **21.10.1998**
(21) Application number: 95922278.7
(22) Date of filing: 09.06.1995
(51) Int. Cl.: F16C 39/06

(54) **DC-BIASED AXIAL MAGNETIC BEARING**
GLEICHSTROM-VORMAGNETISIERTES AXIALMAGNETLAGER
PALIER MAGNETIQUE DE BUTEE POLARISE PAR UN COURANT CONTINU

(30) Priority: 10.06.1994 US 258312
(43) Date of publication of application: 19.03.1997
(73) Proprietor: UNITED TECHNOLOGIES CORPORATION, Hartford, CT 06101 (US)
(72) Inventor: MILLER, Robin, M., Ellington, CT 06029 (US); BOROWY, Dennis, M., Grantham, New Hampshire 03753 (US); NICHOLS, Stephen, B., Charleston, MA 02129 (US)
(74) Representative: Klunker . Schmitt-Nilson . Hirsch
(86) International application number: US9507347
(87) International publication number: WO9534763

(56) References cited:
- EP-A- 0 344 596
- DE-A- 2 800 960
- US-A- 3 790 235

## Description

### Technical Field

This invention relates to magnetic bearings and more particularly to axial (or thrust) magnetic bearings.

### Background Art

It is known in the art of magnetic bearings that provide radial support to a spinning member (or shaft) in a horizontal position, to use a permanent magnet to radially support the shaft. It is also known to have the permanent magnet located in the center of a pair of C-shaped teeth which surround a tab which protrudes from the rotating cylinder. One or more coils are typically wound along the inside contour of the C-shaped teeth circumferentially around the rotating shaft. Variable current is pumped through the coils to provide electromagnetic forces to provide axial (or longitudinal) stability and positioning.

However, in systems that experience strong axial forces in one direction on the spinning member, high currents must be provided to the coils to provide electromagnetic forces strong enough for axial stabilization. Such axial forces could exist in a vertical flywheel arrangement or in an engine application, or any other application having strong axial forces on the spinning member.

Thus, it is desirable to provide a magnetic bearing configuration which allows for low power axial control for a vertical flywheel or other rotating systems that experience high axial forces in primarily one direction.

### Disclosure of Invention

Objects of the invention include provision of a magnetic bearing configuration which does not require high electromagnetic power to provide axial control of a rotating member which exhibits strong axial forces.

According to the present invention an axial magnetic bearing comprises a rotating means capable of rotating about a rotation axis and having a variable axial position along the rotation axis, having an end face and having a support portion extending radially from the rotating means, the support portion having two sides, the rotating means and the support portion allowing the flow of magnetic flux; a control means within which an electromagnetic control flux is generated, having a pair of opposing teeth adjacent to a portion of the support portion and each of the teeth separated from a corresponding side of the support portion by control airgaps, the control means allowing the flow of magnetic flux, to control the location of the support portion between the teeth; a permanent magnet, having a first magnetic pole disposed adjacent to the control means and providing DC magnetic flux; an overhanging arm, disposed adjacent to a second magnetic pole of the magnet, having an arm surface adjacent to the end face of the rotating means, and being separated from the end face by a bias airgap, the arm carrying flux from the magnet to the bias airgap; and the overhanging arm means, the bias airgap, the rotating means, the support portion, the control airgaps, and the control means providing a flux loop for the DC magnetic flux from the first pole to the second pole, the DC flux exerting an attractive axial force between the face of the rotating means and the arm surface.

According to a preferred embodiment, the rotation axis has a component in the vertical direction and the attractive axial force has sufficient force to levitate the rotating means, to provide a predetermined spacing for the bias airgap, and to substantially center the support between the teeth of the control means.

According further to the preferred embodiment, coils are wrapped within the control means, to carry electric current which generates electromagnetic fields in the control means, the control airgaps, and the portion of the support portion located between the teeth, to adjust the forces on the support portion and thereby control the location of the support portion between the teeth.

According still further to the preferred embodiment, at least one sensor is provided which is disposed at a location so as to monitor a surface on the rotating means to measure the axial position of the rotating means and provides an electrical axial position signal indicative thereof.

The present invention represents a significant improvement over previous axial magnetic bearing configurations by allowing for lower power axial (or longitudinal) control of systems which experience strong axial forces, such as a partially or totally vertically configured flywheel system or a horizontal (or vertical) engine application. The invention provides a permanent magnet bias of an end face of the spinning member, as well as a variable electromagnetic trim, along the longitudinal axis of a spinning member (i.e., axially). In a vertical flywheel application, the permanent DC magnet supports (by attraction) the constant weight of the spinning member and the electromagnetic portion provides a trim control for vertical turbulence.

Alternatively, in a horizontal engine-type application, the DC magnet is set to the average axial force generated by the engine so as to require electromagnetic variation over only half the force range, as opposed to the entire force range that would be required by conventional axial magnetic bearing configurations.

Accordingly, the invention allows for a much lower overall range of current in the coils thereby reducing the size of the coils and the size, power consumption, and heatsinking requirements of an electromagnetic variable speed control circuit which drives the coils.

The foregoing and other objects, features and advantages of the present invention will become more apparent in light of the following detailed. description of exemplary embodiments thereof as illustrated in the accompanying drawings.

### Brief Description of Drawings

Fig. 1 is a cross-sectional side view of prior art axial magnetic bearing having a radial permanent magnet.

Fig. 2 is a cross-sectional side view of an axial magnetic bearing, in accordance with the present invention.

Fig. 3 is a blown-up cross-sectional side view of a tab between a pair of teeth and the air gaps associated therewith, in accordance with the present invention.

Fig. 4 is a blown-up cross-sectional side view of an upper surface of a spinning member, an overhanging arm and an air gap therebetween, in accordance with the present invention.

Fig. 5 is a cross-sectional side view of an alternative embodiment of an axial magnetic bearing, in accordance with the present invention.

Fig. 6 is a cross-sectional side view of an alternative embodiment of an axial magnetic bearing in accordance with the present invention.

### Best Mode for Carrying out the Invention

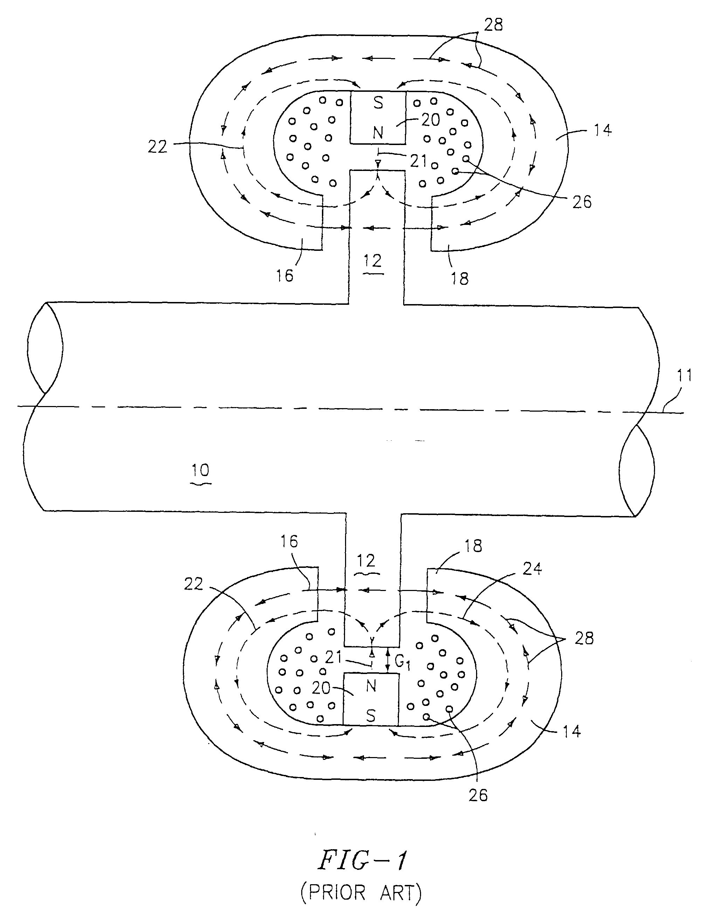

Referring to Fig. 1, a prior art axial (or thrust) magnetic bearing has a spinning member 10 which spins about a center line 11 and which has a tab (or support) 12 projecting radially outward and positioned concentrically with the rotating member 10. Because Fig. 1 is a cross-sectional side view, it appears as though there are two tabs 12 but there is actually a single continuous tab extending radially outward from the spinning member 10. The tab 12 is surrounded on its left and right sides by an axial bearing member 14 having a pair of teeth 16,18 formed in a C-shape (referred to hereinafter as the C-shaped member 14). The C-shaped member 14 is typically made of a material which freely conducts electromagnetic flux.

A permanent magnet 20 is affixed to the center of the C-shaped member 14 against the inner diameter with a north pole facing the radial end face of the tab 12. In that case, the permanent magnet 20 is in the shape of a donut encircling the tab 12. The permanent magnet 20 is separated from the tab 12 by an air gap G1. Flux 21 from the magnet 20 extends across the air gap G1 into the tab 12 and then separates to enter the teeth 16,18 in approximately equal proportions as indicated by the flux lines 22,24. The flux 22,24 travels along the separate teeth 16,18, respectively, and is recombined at the south pole of permanent magnet 20. The permanent magnet 20 thereby provides a DC bias flux on the tab 12.

In the center of the C-shaped member 14 are a plurality of windings or coils 26. Current is pumped through the coils 26 to provide bi-directional electromagnetic flux as indicated by the flux lines 28. When an axial force along the center line 11 of the member 10 pushes the tab 12 to the right, current flows through the coils 26 to force the tab 12 (and the spinning member 10) back to the center of the C-shaped member 14 between the teeth 16,18. Similarly, when an axial force on the spinning member 10 forces the tab 12 to the left, current through the coils 26 is driven in the opposite direction to cause an opposite force to push the tab 12 back to the right. It should be understood that the position of the shaft 10 and the tab 12 will be monitored by position sensors (not shown) and the coils will be driven with current from a drive circuit (not shown) in response to this change in axial position. This is referred to as an axial magne thus requiring high current (or power) levels in the coils for systems which exhibit high axial forces.

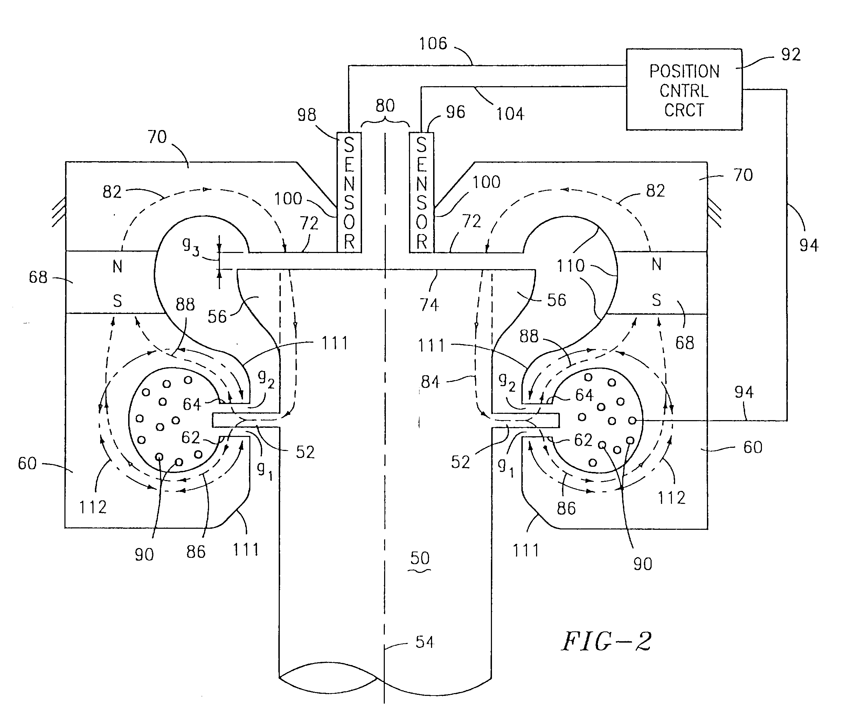

Referring now to Fig. 2, the axial bearing of the present invention includes a spinning member 50 having a radially extending tab 52. The spinning member 50 rotates about a center line 54. The upper portion of the spinning member 50 has an expanded diameter or flange region 56 (discussed hereinafter).

Surrounding the upper and lower sides of the tab 52 is an electro-magnetic control member 60 having a C-shaped contour (referred to hereinafter as the C-shaped member 60) having a pair of teeth with surfaces 62,64 adjacent to and substantially parallel to the tab 52. The tab 52 is separated from the surfaces 62,64 by control airgaps (or control gaps) g1,g2, respectively. The airgaps g1,g2 are also referred to as control airgaps because they have an effect on the dynamic electro-magnetic control of axial motion (discussed more hereinafter).

Adjacent to an upper side of the C-shaped member 60 is a permanent magnet 68 having a south pole adjacent to the C-shaped member 60. Adjacent to the north pole of the permanent magnet 68 is an overhanging arm 70 having an end face 72 which is substantially parallel to an end face 74 of the spinning member 50. An air gap g3 exists between the face 72 of the overhanging arm 70 and the face 74 of the rotating member 50. The airgap g3 is also referred to as the "bias" airgap.

A hole 80 is provided in the overhanging arm 70, thereby allowing external access to the end face 74 of the rotating member 50, e.g., to provide cooling of the shaft 50 or for servicing purposes, etc.

The permanent magnet 68 has a donut shape which circumferentially surrounds the rotating member 50 and has substantially flat upper and lower sides. Other magnet shapes may be used if desired. The magnet 68 provides DC steady state flux 82 that exits the north pole of the magnet 68 and travels through the overhanging arm 70. The flux 82 exits the face 72 of the arm 70 crosses the bias airgap g3 and travels along the rotating member 50 as indicated by a line 84. The flux 84 enters the tab 52 and branches off in substantially equal amounts across the control airgaps g1,g2, to the end faces 62,64 of the C-shaped member 60, as indicated by the flux lines 86,88, respectively. The flux 86,88 recombines at the south pole of the magnet 68 to complete the flux circuit (or loop). Even though the distance traveled by the flux 86 is slightly longer than that traveled by the flux in path 88, the flux split is substantially identical because the C-shaped member 60 is highly magneto- conductive (or has high permeability).

The flux loop 82,84,86,88 (provided by the permanent magnet 68 as a flux source) traveling through the arm 70, the rotating member 50, the tab 52, and the C-shaped member 60, provides an attractive force between the end face 72 of the overhanging arm 70 and the upper face 74 of the rotating member 50. The strength of the permanent magnet is sized to lift the weight of (or levitate) the spinning member 50 such that there is a finite bias airgap g3 of about .02 inches in steady state.

In that condition, the C-shaped member 60 is positioned so the tab 52 is positioned substantially equally between the surfaces 62,64, so the control gaps g1,g2 are substantially the same, e.g., about .015 inches.

Inside the C-shaped member 60 is a plurality of coils 90 which wrap circumferentially around the rotating member 50. A position control circuit 92 provides a bi-directional drive current on a line 94 to the coils 90 (discussed hereinafter).

A pair of position sensors 96,98 are disposed along an internal face 100 of the hole 80 of the overreaching arm 70. The position sensors 96,98 may be located at any location where they can look at the axial face of the rotating member. The position sensors 96,98 determine the axial position of the rotating member 50 relative to the arm 70 and provide electrical signals indicative of the bias gap g3 on lines 104,106, respectively, to the position control circuit 92.

The position control circuit 92 contains known signal processing and electronic components needed to provide the functions described herein. The details of the position control circuit 92 are not critical to the present invention.

More than one position sensor 96, 98 is provided to allow for averaging of any surface imperfections in the end-face 74 of the rotating member 50 or wobble which may occur in the rotating member 50. However, a single sensor may be used if desired. In that case, the best location for the position sensor would be along the center line 54 of the rotating member 50 and may be attached to the overhanging arm in a known way. The type of position sensor used may be inductive, optical, capacitive, or any sensor capable of sensing position of the rotating member 50 relative to the end face of the overhanging arm 70 (i.e., the bias gap g3).

The interface 110 of the overhanging arm 70, the permanent magnet 68, and the upper portion of the C-shaped member 60 are semicircular in shape to provide a large airgap between the sides of the permanent magnet 68 and any adjacent magneto-conductive material. This helps to minimize leakage flux from the permanent magnet 68. Other shapes may be used if desired, e.g., square, rectangle, etc., provided flux leakage is minimized.

Also, leakage of the electromagnetic flux 112 generated by current in the coils 90 is reduced by the rounded outer contour 111 of the upper and lower portions of the C-shaped member 60 nearest the rotating member 50.

If an axial force along the center line 54 (upwardly or downwardly in Fig. 2), is exerted on the rotating member 50, the position control circuit 92 senses a change in the bias gap g3 and provides a current on the lines 94 to the coils 90 which provide a flux path 112 circulating through the C-shaped member 60. The direction of current in the coils 90 determines the direction of the flux path 112 which determines the direction of the counteracting force created by the magnetic fields 112.

For example, if a downward axial force acts on the rotating member 50, the position control circuit 92 would sense a change in the bias gap g3 and provide a current through the coils flowing in a direction into Fig. 2 on the right side of the C-shaped member 60, and out of Fig. 2 on the left side of the C-shaped member 60, thereby creating an electromagnetic field 112 in the clockwise direction. The field 112 cancels a portion of the DC bias flux from the permanent magnet 68, thereby reducing the attractive force between the tab 52 and the lower surface 62. Similarly, the field 112 adds to the DC bias field, thereby increasing the attractive force between the tab 52 and the surface 64. Thus, there is a net increase in upward force on the tab 52, thereby counteracting the axial downward force on the rotating member 50. A similar but opposite situation occurs when an upward force acts on the rotating member 50. Thus, the gap g3 is always maintained at a substantially constant value in steady state (e.g., about .02 inches) and the gaps g1,g2 are also maintained at a substantially constant distance, e.g., .015 inches, in steady state. Other gap spacings may be used if desired.

The C-shaped member 60 is made of a material that can handle high frequency magnetic field variations, e.g., PERMENDUR® which has a frequency range of approximately 10 kilohertz. This allows for high frequency electromagnetic flux control with the current through the coils 90. Carbon steel is not desirable for high frequency applications because there is a large amount of high frequency losses. Also, for best performance, the C-shaped member 60 may be laminated to provide maximum magnetic field conductivity. The rotating member 50 and the tab 52 are made of low carbon steel. The overhanging arm 70 is made of low carbon steel or any material that freely conducts magnetic fields. Alternatively, the tab 52 may be laminated in the concentric circles to improve frequency response; however, one must be careful to ensure that the stress on the tabs 52 do not exceed the strength of the laminations. Because the path length is short along the tab 52 the high frequency losses are much less and, thus, making the tab with low carbon steel does not cause significant losses. Other materials may be used if desired.

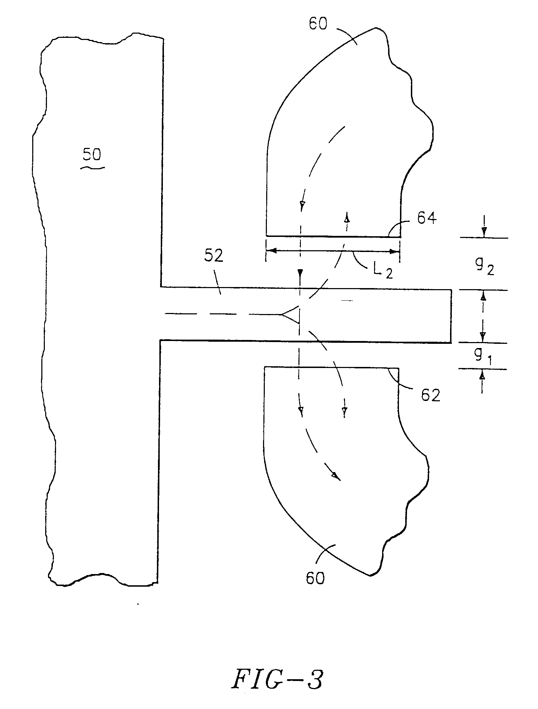

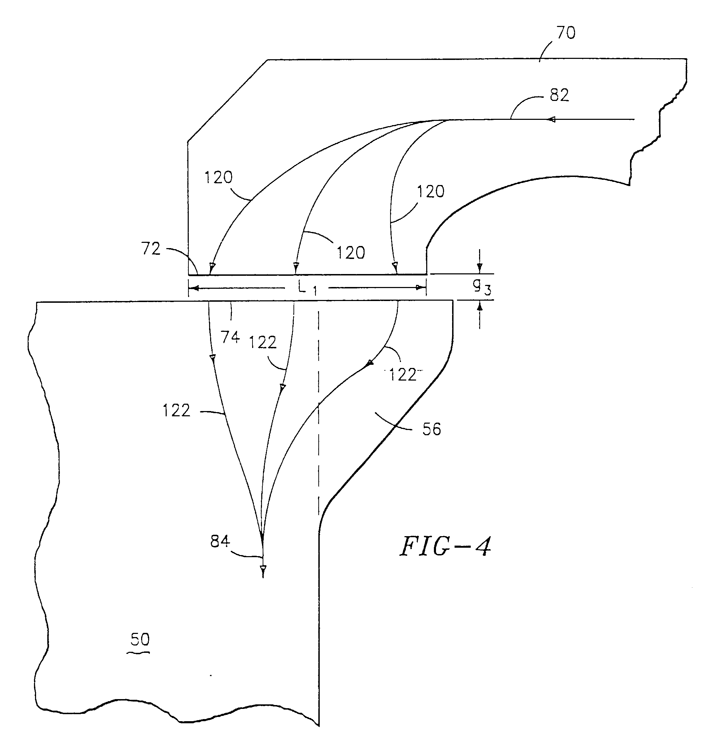

Referring now to Figs. 3 and 4, the attractive force across the bias gap g3 is substantially constant, however the control gaps g1,g2 exhibit forces which are highly destabalizing, thereby requiring relatively high speed electromagnetic control. In particular, referring to Fig. 3, regarding the forces across the control gaps g1,g2.

The attractive force (F) caused by magnetic flux flowing through a magneto-conductive material across an air gap to another magneto-conductive material is proportional to the surface area of the material from which the flux is exiting times the flux density squared, or F ∼ x B². The flux density (B) is defined as the amount of flux (φ; in Webers) per unit area (A), or φ/A. Thus, as the surface area decreases, the flux density increases and, hence, the attractive force (F) increases. Accordingly, combining the two equations, F∼φ²/A. Also, the amount of flux that flows across an airgap is inversely proportional (not necessarily linear) to the size of the airgap (analogous to a resistance in electrical circuits). Thus, the larger the airgap, the smaller the flux flow across it. Accordingly, for a given airgap between two materials, the amount of force is inversely proportional to the cross-sectional area of the material from which the flux exits.

Referring to Fig. 3, if an axial force is exerted on the rotating member 50 so as to move it off-center between the two teeth 62,64, the flux paths through the teeth 62,64 cause a destabalizing effect which drives the tab 52 further away from the center between the two teeth surfaces 62,64. In particular, for downward motion where the tab 52 is displaced so the gap g2 is twice as large as the gap g1, i.e., g2=2*g1, two effects occur. First, the airgap g2 is increased so the flux (φ) is decreased in (at least) a proportional manner, and the attractive force (F) between the surface 64 and the tab 52 is decreased even more due to the squared relationship between force and flux. Second, the gap g1 is decreased so the flux (φ) is increased in (at least) a proportional manner, and the attractive force (F) between the surface 62 and the tab 52 is increased even more due to the squared relationship between force and flux. Thus, the upward force on the tab 52 decreases and the downward force on the tab 52 increases, both in a squared relationship, thereby causing the tab 52 to accelerate toward the lower surface 62. Consequently, the control for the position control circuit 92 must be fast enough to compensate for small axial changes in the tab 52 to minimize the amount of current needed to pull the tab back to the center. We have found that a control closed loop bandwidth of 10K Hz is sufficient to compensate for most situations in a totally vertical flywheel arrangement.

Referring now to Fig. 4, the length L1 (or outside radius minus inside radius) of the surface 72 (and thus the surface area) of the overhanging arm 70 is made much longer than the length L2 of the surfaces 62,64 of Fig. 3 (and thus the surface area thereof). This provides a larger surface area and thus smaller flux density for the bias gap than for the control gap. This allows the flux to branch out over the larger area as indicated by flux lines 120.

As a result, for a given change in bias and control airgaps, the corresponding change in bias force between the surfaces 72,74 is much less than the change in control force between the surfaces 62,64 and the tab 52 (by the ratio of surface areas between the bias and control surfaces). In particular, for a bias airgap g3 of about 0.02 inches, and a length of 1.2 inches, the corresponding change in force due to a change in the bias airgap g3 of .005 inches is quite small. Further, the bias airgap g3 has no additional destabalizing forces on it, unlike the C-shaped member 60. Thus, small changes in the airgap g3 may occur without effecting the attraction forces levitating the rotating member 50. Consequently, the electromagnetic control forces controlled by the position control circuit 92 need only compensate primarily for changes in the control airgaps g1,g2 and not the bias airgap g3.

Also, the length (or diameter) of the upper surface 74 of the rotating member 50 is at least as long as the length L1 of the face 72 of the overhanging arm 70. To provide the needed surface area of the face 74 to match that of the face 72, the flange 56 is provided to the smaller diameter rotating member 50. Alternatively, the diameter of the rotating member 50 may be equal to that of the rotating member with the flange 56 for its entire axial length. However, to minimize shaft diameter, and thus reduce weight, the flange 56 may be used to allow the flux 120 which bridge the gap g3, to enter the rotating member 50 as the flux paths 122 and to channel together to form the flux path 84 in the narrower portion of the shaft. This configuration allows for the desired flux density, force, and surface area relationship needed while also reducing the remaining diameter of the rotating member 50.

Referring to Figs. 3 and 4, the tab 52 (Fig. 3) and the flange 56 (Fig. 4) overhang the teeth surfaces 62,64 and arm surface 72, respectively. This provides a consistent flux path over the range of thermal expansion and contraction of these parts.

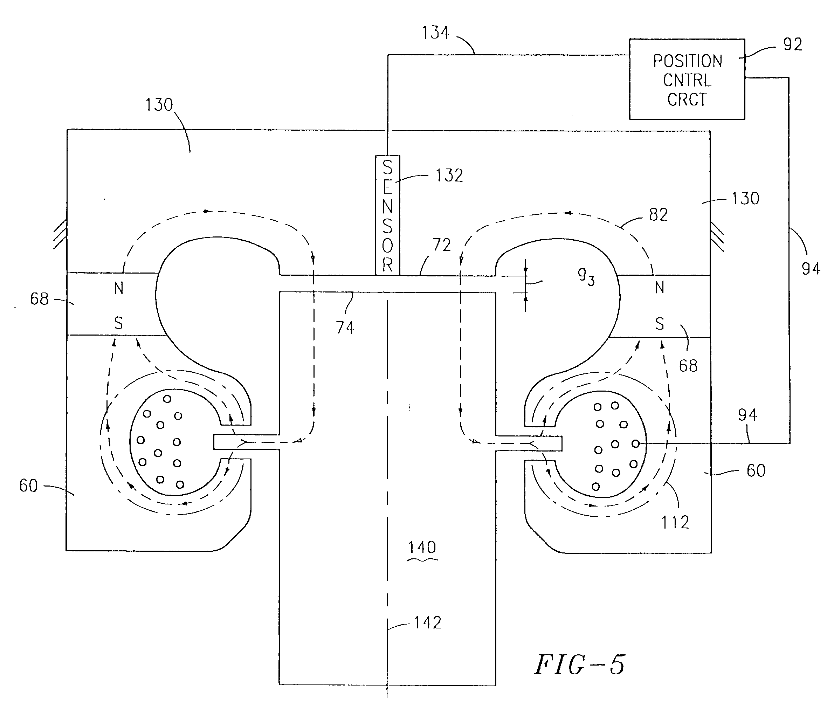

Referring now to Fig. 5, an alternative embodiment of the present invention includes an overhanging arm 130 similar to the overhanging arm 70 of Fig. 2; however, there is no hole through the center. Also, a single position sensor 132, similar to the position sensors 100 of Fig. 2, is disposed in the arm 130 and provides an electrical signal on a line 134 indicative of the bias gap g3. Further, a spinning member 140 similar to the spinning member 50 of Fig. 2, but without the flanges 56, is provided in this embodiment.

This embodiment functions in substantially the same way as that of Fig. 2 discussed hereinbefore. However, because there is no hole in the center of the overhanging arm 130 and the sensor 132 may be placed along a center line for 142 of the rotating member 140. It should be understood that the flanges 56 of Fig. 2 may also be used for the rotating member 140 if desired.

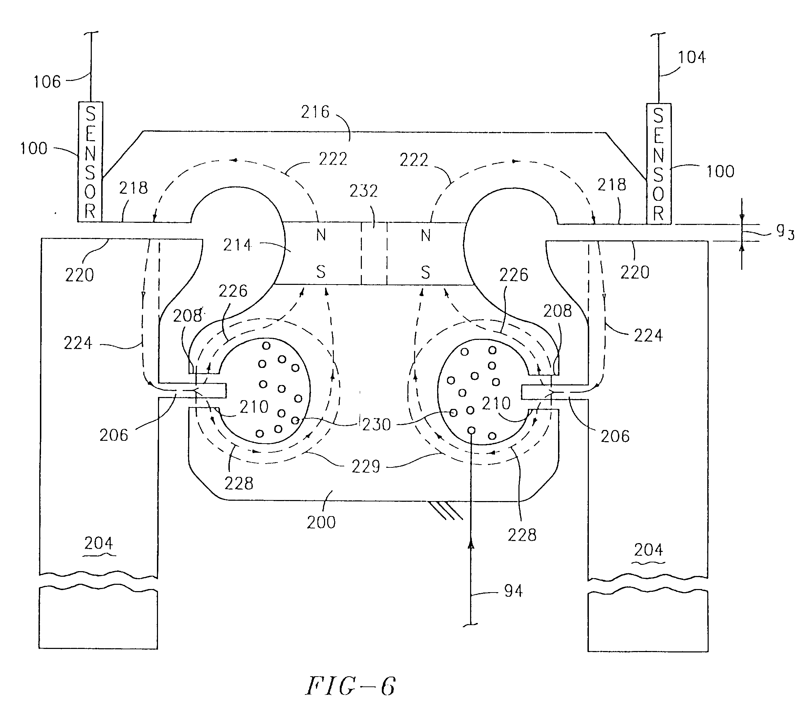

Referring now to Fig. 6, alternatively, instead of the rotating member being in the center and the C-shaped members being around the perimeter thereof, the spinning member may be located circumferentially around the outside and the stationary portion located inside thereof. In particular, a back-to-back C-shaped member 200 (serving a similar function to that of the C-shaped member 60 of Fig. 2) is located inside the inner diameter of a rotating member 204 which rotates outside the member 200 (as a cylinder). The rotating member 204 has a tab 206 which is disposed between surfaces 208,210 of the back-to-back C-shaped member 200. Adjacent to the back-to-back C-shaped member 200 is a permanent magnet 214. Adjacent to the north pole of the permanent magnet 214 is an overhanging arm member 216 having an end face 218. The end face 218 is adjacent to and substantially parallel to an upper end face 220 of the rotating member 204. The two end faces 218,220 are separated by the bias gap g3 (i.e., between the upper surface of spinning member and the overhanging arm, similar to Fig. 2).

In this embodiment, the position sensors 100 (discussed in Fig. 2) are disposed on the overhanging arm 216 to measure the gap g3 between the rotating member 204 and the overhanging arm 216. DC magnetic fields 222 exit the permanent magnet 214, travel along the overhanging arm 216, travel across the bias gap g3 and along the rotating member 204 as the field 224. The field 224 enters the tab 206 and splits into substantially equal flux paths 226,228 and recombine at the south pole of the permanent magnet 214. The DC magnetic field from the permanent magnet 214 provides an attractive force to support the weight of the rotating member 204 in steady state such that the tab 206 is equally spaced between the two surfaces 208,210 of the back-to-back C-shaped member 200, similar to that discussed for Fig. 2.

Also, coils 230 are wrapped around the central region of the back-to-back C-shaped member 200 and provide a variable electromagnetic field 229 which encircles each of the C-shaped members and provide forces on the tabs 206 to counteract axial forces exerted on the rotating member 204 similar to that discussed regarding Fig. 2 hereinbefore. Also, the current in the coils is provided on the lines 94 similar to that discussed in Fig. 2 hereinbefore. The materials for the rotating member 204, the tab 206, the overhanging arm 216, and the C-shaped member 200, are the same as those discussed hereinbefore for comparable parts of Fig. 2.

Alternatively, instead of the permanent magnet 214 being solid, a donut-shaped magnet may be used. In that case, a central region 232 may be made of a non-magneto-conductive material (or non-permeable, or a material having low permeability).

In general, for each embodiment, the invention provides DC magnetic fields to pre-bias the mechanical position of the rotating member so as to allow the electromagnetic forces generated by current through the coils to compensate primarily for changes (or perturbations) along the axial direction. In the case of a (partially or totally) vertical flywheel arrangement, the permanent magnets provide sufficient attractive magnetic field force to support the weight of the rotating member and any flywheel attached thereto, i.e., levitate the rotating member, so that the tab is located centrally between the teeth surfaces of the C-shaped control members. Thus, the electromagnetic fields generated by current in the coils are needed only to counteract any additional axial motion or force on the rotating member.

However, in the case of a horizontal application, such as that of an engine with variable thrust force, the DC magnetic field may be used to provide an average DC offset so as to minimize the maximum electromagnetic force needed to be exerted by the coils on the tab of the rotating member. For example, if the engine produces a maximum axial force of 50 pounds the DC magnetic field should be set to provide 25 pounds (or the average axial force) and the coils can be used to provide forces to balance the tab by applying a maximum of 25 pounds and minimum of 0 pounds of force on the tabs, as opposed to requiring the coils to generate 50 lbs of force.

Also, the inner and outer surface shape of the "C-shaped" member may be a circle, a rectangle, a square, etc., or any combination thereof, provided there is an interior area where coils may be located, there are two tooth-like portions to surround a tab from a rotating member which provide a dual return flux path for DC flux from a permanent magnet and a flux path for controlling electromagnetic flux.

It should be understood that, for a vertical flywheel arrangement, the flywheel may be the rotating member 50 (Fig. 2) and/or a heavier portion of a flywheel may be attached to the lower portion of the rotating member 50.

Also, it should be understood that, for any of the embodiments discussed herein, the polarity of permanent magnets may be reversed. In that case, there would be no substantive change to the operation of the system.

Further, instead of a totally vertical flywheel system, the invention will work equally well with a system having a rotating member whose axis of rotation has a component in the vertical direction.

## Claims

1. An axial magnetic bearing, comprising:
a) a rotating means (50; 140; 204) capable of rotating about a rotation axis (54; 142),
aa) having a variable axial position along said rotation axis (54),
ab) having an end face (74; 220) and
ac) having a support portion (52; 206) extending radially from said rotating means (50; 140; 204),
ad) said support portion (52; 206) having two sides,
ae) said rotating means (50; 140; 204) and said support portion (52; 206) allowing the flow of magnetic flux;
b) a control means (60; 200) within which an electromegnetic control flux is generated
ba) having a pair of opposing teeth (62, 64; 208, 210) adjacent to a portion of said support portion (52; 206) and each of said teeth (62, 64; 208, 210) separated from a corresponding side of said support portion (52; 206) by control airgaps (g1, g2),
bb) said control means (60; 200) allowing the flow support of magnetic flux to control the location of the support portion between the teeth;
c) a permanent magnet (68; 214) having a first magnetic pole disposed adjacent to said control means and providing DC magnetic flux;
d) an overhanging arm means (70; 130; 216),
da) disposed adjacent to a second magnetic pole of said magnet,
db) having an arm surface (72; 218) adjacent to said end face (74; 220) of said rotating means (50; 140; 204), and
dc) being separated from said end face (74; 220) by a bias airgap (g3),
dd) said arm means (70; 130; 216) carrying flux from said magnet (68; 214) to said bias airgap (g3); and
c) said overhanging arm means (70; 130; 216), said bias airgap (g3), said rotating means (50; 140; 204), said support portion (52; 206), said control airgaps (g1, g2), and said control means (60; 200) providing a flux loop (82, 84, 86, 88; 222, 224, 226, 228) for said DC magnetic flux from said first pole to said second pole,
f) said DC flux exerting an attractive axial force between said face (74; 220) of said rotating means (50; 140; 204) and said arm surface (72; 218) and
g) said DC flux being the only DC axial force generated by a permanent magnet (68; 214) on said rotating means (50; 140; 204).

2. The axial magnetic bearing according to claim 1, characterized in that
a) said rotation axis (54; 142) has a component in the vertical direction and
b) said attractive axial force has sufficient force to levitate said rotating means (50; 140; 204),
c) to provide a predetermined spacing for said bias airgap (g3), and
d) to substantially center said support portion (52; 206) between said teeth (62, 64; 208, 210) of said control means (60; 200).

3. The axial magnetic bearing according to claim 1, characterized by further comprising coils (90; 230), wrapped within said control means (60; 200), to carry electric current which generates electromagnetic fields (112; 229) in said control means (60; 200), said control airgaps (g1, g2), and said portion of said support portion (52; 206) located between said teeth (62, 64; 208, 210), to adjust the forces on said support portion (52; 206) and thereby control the location of said support portion (52; 206) between said teeth (62, 64; 208, 210).

4. The axial magnetic bearing according to claim 3, characterized by further comprising at least one sensor (96, 98; 132; 100), disposed at a location so as to monitor a surface (74; 220) on said rotating means (50; 140; 204) to measure the axial position of said rotating means (50; 204) and providing an electrical axail position signal indicative thereof.

5. The axial magnetic bearing according to claim 4, characterized by further comprising signal procesing means (92), responsive to said axial position signal, for providing said electric current to said coils (90; 230) for modulating said electromagnetic force so as to keep said support portion (52; 206) located substantially centrally between said teeth (62, 64; 208, 210) of said control means (60; 200).

6. The axial magnetic bearing according to claim 4, characterized in that said sensor (96, 98; 132, 100) is disposed on said overhanging arm means (70; 130; 216).

7. The axial magnetic bearing according to claim 1, characterized in that said control means (60) is located outside the outer diameter of said rotating means (50).

8. The axial magnetic bearing according to claim 1, characterized in that said averhanging arm means (70) has a hole (80) near the center.

9. The axial magnetic bearing according to claim 1, characterized in that said control means (60; 200) is made of magneto-conductive material having a high frequency bandwidth.

10. The axial magnetic bearing according to claim 1, characterized in that said support (52) extends radially outward from said rotating means (50; 140).

11. The axial magnetic bearing according to claim 1, characterized in that said rotating means (50; 204) has a flange (56) extending radially therefrom near said end face (74; 220), thereby providing a large surface area for said DC flux to pass through near said end face (74; 220).

12. The axial magnetic bearing according to claim 11, characterized in that said flange (56) extends radially outward from said rotating means (50).

## Patentansprüche

1. Axialmagnetlager, umfassend:
a) eine Dreheinrichtung (50; 140; 204), die um eine Drehachse drehbar ist;
aa) mit einer veränderlichen Axialstellung entlang der Drehachse (54),
ab) mit einer Stirnfläche (74; 220) und
ac) mit einem Trageteil (52; 206), welches sich radial von der Dreheinrichtung (50; 140; 204) aus erstreckt,
ad) wobei der Trageteil (52; 206) zwei Seiten aufweist,
ae) und die Dreheinrichtung (50; 140; 204) sowie der Trageteil (52; 206) den Strom eines magnetischen Flusses gestattet;
b) eine Steuereinrichtung (60; 200), in der ein elektromagnetischer Steuerfluß erzeugt wird,
ba) mit einem Paar einander gegenüberstehender Zähne (62, 64; 208, 210) in der Nachbarschaft eines Abschnitts des Trageteils (52; 206), wobei jeder der Zähne (62, 64; 208, 210) von einer entsprechenden Seite des Trageteils (52; 206) durch Steuerluftspalte (g1, g2) beabstandet ist,
bb) wobei die Steuereinrichtung (60; 200) den Strom des magnetischen Flusses ermöglicht, um die Stelle des Trageteils zwischen den Zähnen zu steuern;
c) einen Dauermagneten (68; 214) mit einem ersten magnetischen Pol in der Nachbarschaft der Steuereinrichtung und zur Bildung eines magnetischen Gleich-Flusses;
d) eine überhängende Armanordnung (70; 130; 216),
da) benachbart zu dem zweiten Magnetpol des Magneten,
db) mit einer Armfläche (62; 218) benachbart zu der Stirnfläche (74; 220) der Dreheinrichtung (50; 140; 204), und
dc) über einen Vor-Luftspalt (g3) von der Stirnfläche (74; 220) beabstandet,
dd) wobei die Armanordnung (70; 130; 216) Fluß von dem Magneten (68; 214) zu dem Vor-Luftspalt (g3) führt; und
e) wobei die überhängende Armanordnung (70; 130; 216), der Vor-Luftspalt (g3), die Dreheinrichtung (50; 140; 204), der Trageteil (52; 206), die Steuer-Luftspalte (g1, g2) und die Steuereinrichtung (60; 200) eine Flußschleife (82, 84, 86, 88; 222, 224, 226, 228) für den magnetischen Gleich-Fluß von dem ersten Pol zu dem zweiten Pol bilden,
f) wobei der Gleich-Fluß eine axiale Anziehungskraft zwischen der Fläche (74; 220) der Dreheinrichtung (50; 140; 204) und der Armfläche (72; 218) ausübt, und
g) der Gleich-Fluß die einzige axiale Gleichkraft ist, die von einem Permanentmagneten (68; 214) auf die Dreheinrichtung (50; 140; 204) ausgeübt wird.

2. Axialmagnetlager nach Anspruch 1, dadurch gekennzeichnet, daß
a) die Drehachse (54; 142) eine Komponente in vertikaler Richtung aufweist, und
b) die axiale Anziehungskraft ausreichend groß ist, um die Dreheinrichtung (50; 140; 204) anzuheben,
c) um dadurch einen vorbestimmten Abstand für den Vor-Luftspalt (g3) zu schaffen und
d) den Trageteil (52; 206) zwischen den Zähnen (62, 64; 208, 210) der Steuereinrichtung (60; 200) im wesentlichen zu zentrieren.

3. Axialmagnetlager nach Anspruch 1, dadurch gekennzeichnet, daß es weiterhin Spulen (90; 230) aufweist, die in der Steuereinrichtung (60; 200) gewickelt sind, um elektrischen Strom zu führen, der elektromagnetische Felder (112; 229) in der Steuereinrichtung (60; 200), den Steuer-Luftspalten (g1, g2) und dem zwischen den Zähnen (62, 64; 208, 210) befindlichen Abschnitt des Trageteils (52; 206) erzeugt, um die Kräfte einzustellen, die auf den Trageteil (52; 206) einwirken, um so die Lage des Trageteils (52; 206) zwischen den Zähnen (62, 64; 208, 210) zu steuern.

4. Axialmagnetlager nach Anspruch 3, dadurch gekennzeichnet, daß mindestens ein Sensor (96, 98; 132; 100) an einer solchen Stelle angeordnet ist, daß er eine Fläche (74; 220) an der Dreheinrichtung (50; 140; 204) überwacht und die axiale Stellung der Dreheinrichtung (50; 204) mißt und ein entsprechendes elektrisches Axialstellungssignal liefert.

5. Axialmagnetlager nach Anspruch 4, gekennzeichnet durch eine Signalverarbeitungseinrichtung (92), die auf das Axialstellungssignal anspricht, um den elektrischen Strom in die Spulen (90; 230) einzuspeisen und so die elektromagnetische Kraft zum Halten des Trageteils (52; 206) zu modulieren, damit dieses etwa zentrisch zwischen den Zähnen (62, 64; 208, 210) der Steuereinrichtung (60; 200) angeordnet ist.

6. Axialmagnetlager nach Anspruch 4, dadurch gekennzeichnet, daß der Sensor (96, 98; 132; 100) sich an der überhängenden Armanordnung (70; 130; 216) befindet.

7. Axialmagnetlager nach Anspruch 1, dadurch gekennzeichnet, daß die Steuereinrichtung (60) sich außerhalb des Außendurchmessers der Dreheinrichtung (50) befindet.

8. Axialmagnetlager nach Anspruch 1, dadurch gekennzeichnet, daß die überhängende Armanordnung (70) in der Nähe der Mitte ein Loch (80) aufweist.

9. Axialmagnetlager nach Anspruch 1, dadurch gekennzeichnet, daß die Steuereinrichtung (60; 200) aus einem eine Hochfrequenz-Bandbreite aufweisenden magnetisch leitenden Material hergestellt ist.

10. Axialmagnetlager nach Anspruch 1, dadurch gekennzeichnet, daß der Trageteil (52) sich von der Dreheinrichtung (50; 140) radial nach außen erstreckt.

11. Axialmagnetlager nach Anspruch 1, dadurch gekennzeichnet, daß die Dreheinrichtung (50; 204) einen Flansch (56) aufweist, der sich von ihr in der Nähe der Stirnfläche (74; 220) radial erstreckt, um dadurch eine große Oberfläche für den Gleich-Fluß bereitzustellen, der in der Nähe der Stirnfläche (74; 220) passiert.

12. Axialmagnetlager nach Anspruch 11, dadurch gekennzeichnet, daß der Flansch (56) sich von der Dreheinrichtung (50) radial nach außen erstreckt.

## Revendications

1. Palier axial magnétique comprenant :
a) des moyens rotatifs (50; 140, 204) pouvant tourner autour d'un axe de rotation (54, 142),
aa) ayant une position axiale variable le long dudit axe de rotation (54),
ab) ayant une face d'extrémité (74; 220) et
ac) ayant une partie support (52; 206) s'étendant radialement depuis lesdits moyens rotatifs (50; 140; 204),
ad) ladite partie support (52, 206) ayant deux faces,
ac) lesdits moyens rotatifs (50, 140, 204) et ladite partie support (52, 206) permettant l'écoulement d'un flux magnétique;
b) des moyens de commande (60; 220) à l'intérieur desquels est généré un flux de commande électromagnétique
ba) ayant une paire de dents opposées (62, 64; 208, 210) au voisinage d'une partie de ladite partie support (52; 206) et chacune desdites dents (62, 64; 208, 210) étant séparée d'une face correspondante de ladite partie support (52; 206) par des entrefers de commande (g1, g2),
bb) lesdits moyens de commande (60; 200) permettant l'écoulement d'un flux magnétique pour commander de la position de la partie support entre les dents;
c) un aimant permanent (68; 214) ayant un premier pôle magnétique disposé au voisinage desdits moyens de commande et fournissant un flux magnétique à courant continu DC;
d) des moyens formant bras en surplomb (70; 130; 216),
da) disposé au voisinage d'un deuxième pôle magnétique dudit aimant,
db) ayant une surface de bras (72, 218) près de ladite face d'extrémité (74, 220) desdits moyens rotatifs (50, 140, 204), et
dc) étant séparés de ladite face d'extrémité (74; 220) par un entrefer de polarisation (g3),
dd) lesdits moyens formant bras (70; 130; 216) transportant le flux venant dudit aimant (68; 214) vers ledit entrefer de polarisation (g3); et
e) lesdits moyens formant bras en surplomb (70; 10; 216), ledit entrefer de polarisation (g3), lesdits moyens rotatifs (50; 140; 204), ladite partie support (52; 206), lesdits entrefers de commande (g1, g2) et lesdits moyens de commande (60, 200) fournissant une boucle de flux (82, 84, 86; 88; 222, 224, 226, 228) pour ledit flux magnétique continu DC issu du dudit premier pôle vers ledit deuxième pôle,
f) ledit flux DC exerçant une force d'attraction axiale entre ladite face (74, 220) desdits moyens rotatifs (50; 140; 204) et ladite surface de bras (72; 218), et
g) ledit flux DC étant la seule force axiale DC générée par un aimant permanent (68; 214) sur lesdits moyens rotatifs (54, 140, 204).

2. Palier axial magnétique selon la revendication 1, caractérisé en ce que
a) ledit axe de rotation (54; 142) a une composante orientée dans la direction verticale, et
b) ladite force axiale d'attraction a une valeur suffisante pour produire la lévitation desdits moyen rotatifs (50; 140; 204),
c) pour fournir un espacement prédéterminé pour ledit entrefer de polarisation (g3), et
d) pour pratiquement centrer ladite partie support (52; 206) entre lesdites dents (62, 64; 208, 210) desdits moyens de commande (60; 200).

3. Palier axial magnétique selon la revendication 1, caractérisé par le fait de comprendre en outre des bobines (90; 230) enroulées dans lesdits moyens de commande (60; 200) pour véhiculer le courant électrique qui génère des champs électromagnétiques (112; 229) dans lesdits moyens de commande (60; 220), lesdits entrefers de commande (g1, g2) et ladite partie de ladite partie support (52; 206) située entre lesdites dents (62, 64; 208, 210), pour ajuster les forces agissant sur ladite partie support (52; 206) et, de cette manière, commander la position de ladite partie support (52; 206) entre lesdites dents (62; 64; 208; 210).

4. Palier axial magnétique selon la revendication 3, caractérisé par le fait de comprendre en outre au moins un capteur (96, 98; 132, 100) disposé en un emplacement permettant de surveiller la surface (74; 220) sur les moyens rotatifs (50; 140; 204), pour mesurer la position axiale desdits moyens rotatifs (50; 204) et fournir un signal électrique de position axiale indicatif de celle-ci.

5. Palier axial magnétique selon la revendication 4, caractérisé par le fait de comprendre en outre des moyens de traitement de signal (92) réagissant audit signal de position axiale pour fournir ledit courant électrique auxdites bobines (90; 230) pour moduler ladite force électromagnétique, de manière à maintenir ladite partie support (52, 206) placée sensiblement centralement entre lesdites dents (62, 64; 208, 210) desdits moyens de commande (60, 200).

6. Palier axial magnétique selon la revendication 4, caractérisé en ce que ledit capteur (96, 98; 132, 100) est disposé sur lesdits moyens formant bras en surplomb (70, 130, 216).

7. Palier axial magnétique selon la revendication 1, caractérisé en ce que lesdits moyens de commande (60) sont placés à l'extérieur du diamètre extérieur desdits moyens rotatifs (50).

8. Palier axial magnétique selon la revendication 1, caractérisé en ce que lesdits moyens formant bras en surplomb (70) comportent un trou (80) ménagé près du centre.

9. Palier axial magnétique selon la revendication 1, caractérisé en ce que lesdits moyens de commande (60; 200) sont constitués d'un organe magnéto-conducteur ayant une largeur de bande à haute fréquence.

10. Palier axial magnétique selon la revendication 1, caractérisé en ce que ladite partie support (52) s'étend radialement à l'extérieur desdits moyens rotatifs (50, 140).

11. Palier axial magnétique selon la revendication 1, caractérisé en ce que lesdits moyens rotatifs (50, 204) comportent une bride (56) s'étendant radialement à partir d'eux près de ladite phase d'extrémité (74, 220), de manière à fournir une surface d'une grande aire audit flux continu DC passant à travers ladite face d'extrémité (74, 220) se trouvant à proximité.

12. Le palier axial magnétique selon la revendication 11, caractérisé en ce que ladite bride (56) s'étend radialement vers l'extérieur depuis lesdits moyens rotatifs (50).
